# EUROPEAN PATENT SPECIFICATION

(11) **EP 2 329 174 B1**
(45) Date of publication and mention of the grant of the patent: **06.04.2016**
(21) Application number: 09785697.5
(22) Date of filing: 25.09.2009
(51) Int. Cl.: F16L 5/00, H02G 3/22

(54) **PROTECTION FOR ELONGATE FLEXIBLE MEMBER PASSING THROUGH AN APERTURE**
SCHUTZ FÜR EIN VERLÄNGERTES, FLEXIBLES UND DURCH EINE ÖFFNUNG GEFÜHRTES ELEMENT
PROTECTION D'UNE CONDUITE FLEXIBLE TRAVERSANT UNE PAROI

(30) Priority: 03.10.2008 GB 0818118
(43) Date of publication of application: 08.06.2011
(73) Proprietor: Tekmar Energy Limited, Newton Aycliffe, Durham DL5 6AR (GB)
(72) Inventor: RITCHIE-BLAND, Gary, Co Durham DL5 6AR (GB)
(74) Representative: Sanderson, Nigel Paul
(86) International application number: PCT/GB2009/051261
(87) International publication number: WO 2010/038056

(56) References cited:
- WO-A1-2005/095198
- WO-A1-2008/139190
- DE-A1- 10 130 707
- DE-U- 1 786 459
- US-A- 4 289 288

## Description

The present invention relates to an assembly for protecting an elongate flexible member, and relates particularly, but not exclusively, to an assembly for protecting a cable passing through an aperture in a support pillar of an offshore turbine generator. The invention also relates to a method of installing an elongate flexible member into an aperture.

Power is collected from offshore wind driven turbine generators by connecting one or more generators together by means of electrical cables, and connecting at least one cable to a collection station from which power can be taken ashore by means of a further cable. The cables are connected at one end to a support pillar of the generator, which is generally embedded in the sea bed, and pass through an aperture in a wall of the support pillar from a connection point inside the support pillar, and rest on the sea bed outside of the support pillar. Because the cable outside of the support pillar is subjected to movement as a result if tides and weather, the cable is vulnerable to damage as a result of movement of that part of the cable which comes into contact with the edge of the aperture. In particular, contact with the edge of the aperture can cause the cable to be bent around a sufficiently small bend radius to cause damage. It is therefore necessary to protect cables such cables against damage.

One known arrangement for protecting cables from damage at the location at which they pass through the aperture in the support pillar of a turbine generator consists of attaching a cable protector (known as a J-tube) to the support. The J-tube has a straight part and a curved part and is mounted to the aperture such that the curved portion passes through the aperture. The J-tube then acts as a cable guide and prevents the bending radius about which the cable is bent at the edge of the aperture from becoming less than a specified minimum value which could cause damage to the cable.

The J-tube is mounted to the support pillar of the turbine either before or after installation of the support pillar into the seabed. However, this arrangement suffers from the drawback that because the supports are generally installed by driving them into the sea bed, which subjects the supports to significant mechanical stresses, J-tubes mounted to the support before installation of the support in the sea bed can become damaged or dislodged during subsequent installation of the support or must be made sufficiently robust that the cost becomes prohibitive. On the other hand, if the J-tube is mounted to the support pillar after installation of the support, the cost of installation becomes extremely high, as a result of the need for specialist equipment and personnel to carry out such offshore installation.

Another arrangement is known in which a support (known as an I-tube) is mounted to the external surface of the support for preventing the bending radius of the cable from becoming less than a specified minimum value. Although I-tubes are easier (and therefore less expensive) to install than J-tubes, installation is nonetheless expensive, and it is difficult to provide an I-tube having performance as satisfactory as that provided by a J-tube.

Preferred embodiments of the present invention seek to overcome one or more of the above disadvantages of the prior art.

WO2005/095198 describes a pulling head for pulling a cable (umbilical) upwardly into an I-tube. A latching arrangement can retain the pulling head in the I-tube.

WO2008/129190 describes a cable protection arrangement for upward insertion into an I-tube. A pair of latches can hold the arrangement in the I-tube after insertion.

DE 10130707 describes an expandable plug with a through bore for receiving telephone or television cables. The plug is insertable into a bore formed in the wall of a building and can prevent water ingress through the bore.

According to an aspect of the present invention, there is provided a protection device for preventing damage to a cable for transmitting power from a generator of an offshore turbine generator, the cable passing through an aperture in a support pillar of the offshore turbine generator to the sea bed, the device comprising the features of claim 1.

This provides the advantage of improving the reliability of engagement between the device and the edge of the aperture.

By providing a protection device having latching means for engaging an edge of the aperture to prevent removal of the body from the aperture and prevent the cable from engaging the edge of the aperture, this provides the advantage of providing easier installation of a device for preventing the bend radius of the cable from becoming less than a predetermined minimum value at the edge of the aperture. This therefore reduces the cost of installation of the cable.

At least one said latching member may have a respective inclined portion for engaging the edge of the aperture when the body is inserted into the aperture in said first direction.

This provides the advantage of making installation of the device easier.

At least one said latching member may be biased towards the second position thereof by means of at least one torsion spring arranged in the body.

This provides the advantage of enabling the device to be constructed more compactly and less expensively.

The device may further comprise at least one abutment portion arranged on said body for abutting the edge of the aperture to limit movement of the device through the aperture in said first direction.

The body may be adapted to be mounted to a flexible bend limiting device at a first and/or second end of said body.

This provides the advantage of minimising the risk of damage to a flexible elongate member such as a cable at end portions of the protection device.

According to another aspect of the present invention, there is provided a protection assembly for a cable, the assembly comprising:
a protection device according to the first aspect of the invention and
a bend limiting device for resisting bending of the cable passing through the aperture, the bend limiting device comprising:-
   an elongate flexible body adapted to pass through the aperture and having an internal passageway for allowing movement of the cable therethrough; and
   attachment means adjacent a first end of said body for enabling attachment of a pulling member thereto to enable pulling of the device through the aperture.

By suitable choice of the material and/or properties of the elongate flexible body, this provides the advantage of enabling bending of the cable passing through the bend limiting device to be resisted. This in turn provides the advantage of minimising the risk of damage to the cable as a result of it being bent around too small a bend radius.

The attachment means may comprise at least one tensile member having an engagement portion adjacent a first end thereof.

At least one said tensile member may be at least partially embedded in said body.

This provides the advantage of minimising the risk of the tensile member becoming detached from the body.

The assembly may further comprise mounting means adjacent a second end of said body for mounting the bend limiting device to a protection device as defined above.

At least one said tensile member may be attached to said mounting means adjacent a second end thereof.

This provides the advantage of minimising the risk of detachment of the tensile member from the body.

The attachment means may further comprise tension limiting means for limiting the tension applied to the device by means of a pulling member.

The tension limiting means may comprise at least one attachment device adapted to break when a tension applied thereto exceeds a predetermined level.

This provides the advantage of enabling a pulling member to be connected to the bend limiting device and to an elongate flexible member such as a cable passing through the bend limiting device, and to enable a protection device attached to the bend limiting device to be installed in an aperture, and the cable to be pulled through the protection device when installed in the aperture, in a single operation. This improves the ease of and reduces the cost of installation.

The assembly may further comprise a second bend limiting device adapted to be mounted to a second end of said protection device, the second bend limiting device comprising an elongate flexible body having an internal passageway for passage of an elongate flexible member therethrough.

The second bend limiting device may be adapted to be attached to a third bend limiting device at a second end of said second bend limiting device.

The second bend limiting device may be adapted to be attached to a third bend limiting device by means of at least one groove in said body adjacent said second end.

The assembly may further comprise a third bend limiting device comprising a plurality of bend restriction members, wherein each of said plurality of bend restriction members has a respective passageway to enable passage of an elongate flexible member therethrough, and each said bend restriction member is adapted to be mounted to at least one further said bend restriction member to allow limited pivotal movement of said bend restriction members relative to each other.

According to a further aspect of the present invention, there is provided a method of inserting a cable into an aperture in a support pillar of an offshore turbine generator, the method comprising:-
attaching a pulling member to attachment means of a bend limiting device of a protection assembly as defined above, wherein the cable is mounted adjacent a first end of said bend limiting device such that said protection assembly is located adjacent a first end of said cable and said pulling member extends through the aperture;
pulling, by means of said pulling member, the protection assembly in a first direction to cause the protection device of said protection assembly to engage an edge of the aperture; and
pulling cable through said protection assembly in said first direction.

By pulling the protection assembly in a first direction to cause the protection device to engage an edge of the aperture and pulling the elongate flexible member through the protection assembly in the first direction, this provides the advantage of simplifying and reducing the cost of the installation process.

The elongate flexible member may be pulled through the protection assembly by means of the pulling member.

This provides the advantage of simplifying installation.

The step of attaching the pulling member to said attachment means may comprise attaching the pulling member to said attachment means by means of tension limiting means adapted to limit the tension applied to the protection assembly by means of the pulling member.

By connecting the pulling member directly to the elongate flexible member and to the attachment means by means of the tension limiting means, this provides the advantage of enabling the protection assembly and elongate flexible member to both be installed in the aperture by means of the same pulling member in a single process.

The method may further comprise supporting the elongate flexible member at a location spaced from said aperture.

This provides the advantage of minimising the risk of damage to the elongate flexible member by controlling the bend radius to which the elongate flexible member is subjected.

The elongate flexible member may comprise a cable or conduit.

A preferred embodiment of the invention will now be described, by way of example only and not in any limitative sense, with reference to the accompanying drawings in which:-
Figure 1 is a schematic side view of a cable and cable protection assembly embodying the present invention installed in a support pillar of an offshore turbine generator;
Figure 2 is a perspective view of the cable protection assembly of Figure 1;
Figure 3 is a perspective view of a first bend stiffener of the cable protection assembly of Figures 1 and.2;
Figure 4 is a perspective view of a latching device of the cable protection assembly of Figures 1 and 2;
Figure 5 is a perspective view of a second bend stiffener of the cable protection assembly of Figures 1 and 2;
Figure 6 is a perspective view of a bend restrictor element of the cable protection assembly of Figures 1 and 2; and
Figure 7 is a perspective view of attachment devices for attaching a pulling line to the cable and cable protection assembly of Figure 1.

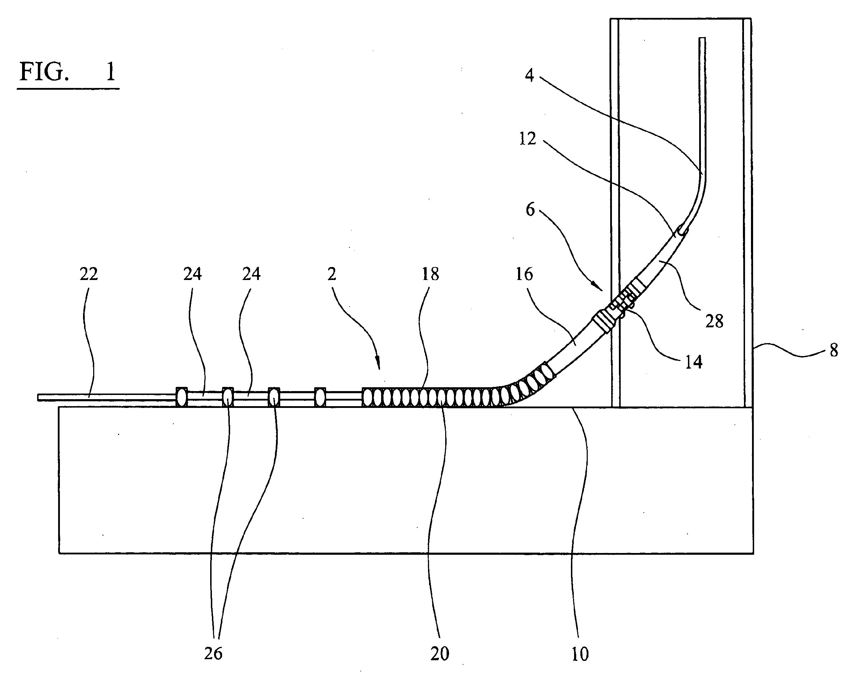

Figure 1 shows a schematic representation of a cable protection assembly 2 for enabling a flexible electrical cable 4 to be installed through an aperture 6 of a support pillar 8 of an offshore turbine generator (not shown) to enable the cable 4 to be connected to the generator and lie on the sea bed 10. The cable protection assembly 2 is designed to prevent the cable 4 from being bent around a bending radius sufficiently small to cause damage to the cable 4 at an edge of the aperture 6.

The cable protection assembly 2 comprises a first bend limiter 12 at a leading edge of the assembly 2, a mechanical latch 14 mounted to the first bend limiter 12 by means of co-operating threaded parts, a second bend limiter 16, mounted to the latch 14 by means of co-operating threaded parts, a third bend limiter 18 formed from a series of interconnected bend restrictor elements 20, and a fourth bend limiter 22 formed from a series of rigid tubes 24 connected end to end by means of polyurethane adaptors 26. A bell mouth bracket (not shown) may be included at the trailing end of the assembly 2 to enable a retrofit cable to be pulled through the assembly 2 while located subsea.

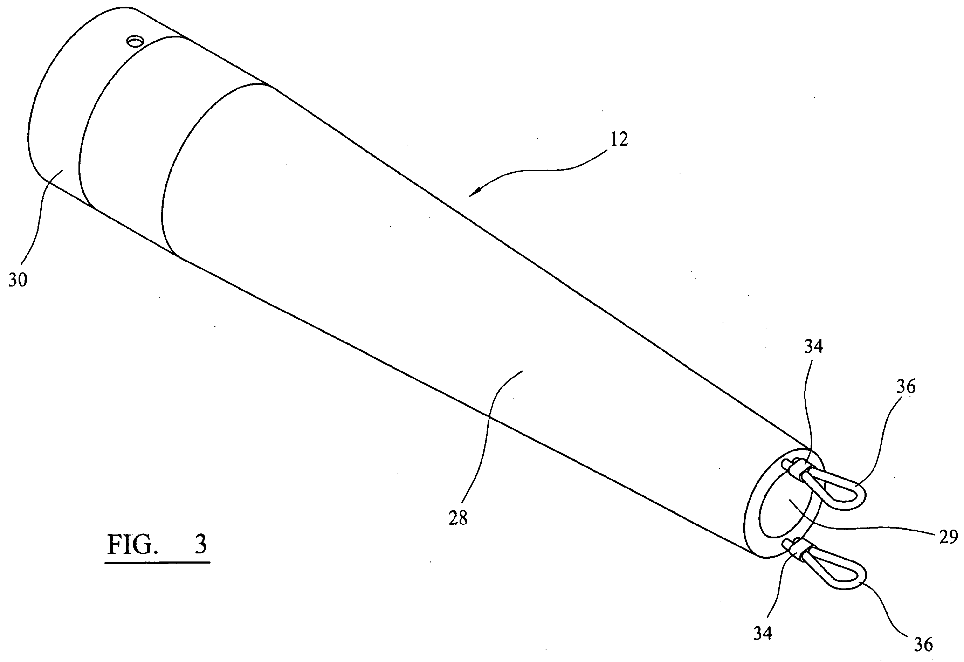

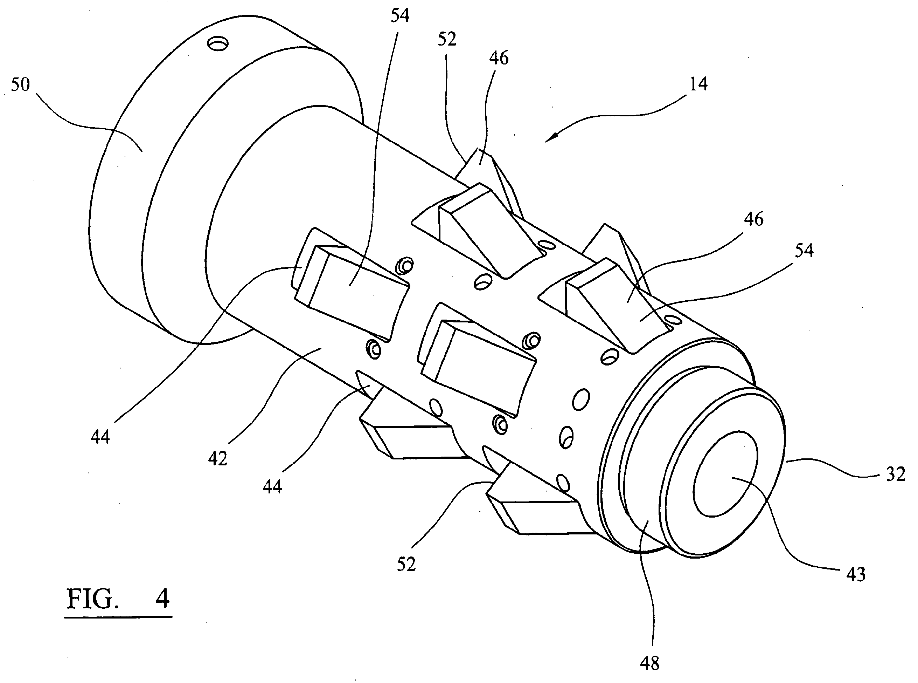

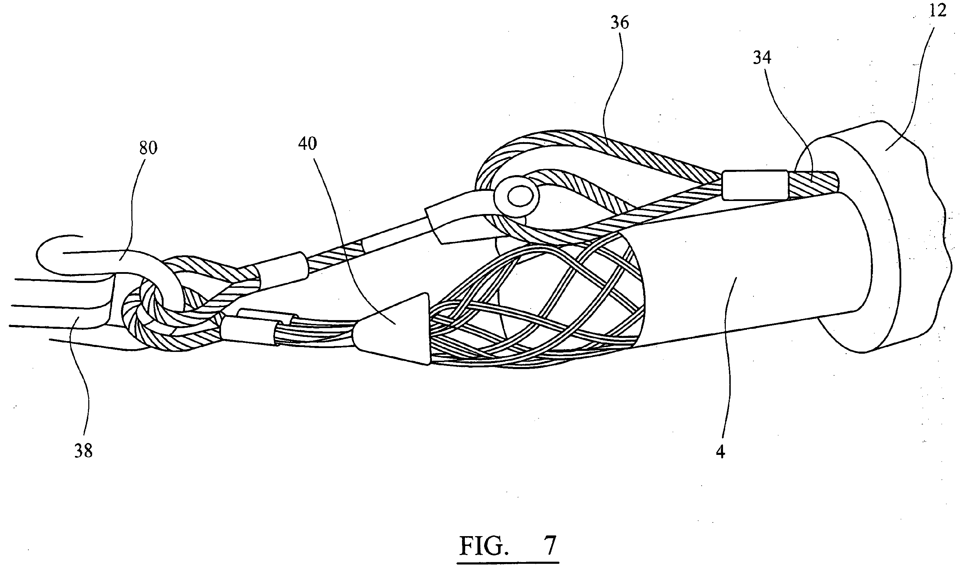

Referring to Figure 3, the first bend limiter 12 has an elongate tapered body 28 formed from high grade polyurethane elastomer and having an internal bore 29 for passage of the cable 4. The body 28 has a threaded steel insert 30 to enable the first bend limiter 12 to be mounted to a leading end 32 of the mechanical latch 14 (Figure 4). A pair of load bearing wire ropes 34 are attached to the insert 30 and are embedded in the elastomer body 28 to prevent removal of the ropes 34 from the body 28. The ropes 34 are provided with loops 36 for connection to a pulling line 38 (Figure 7), which is pre-installed in the support pillar 8 and an end of which protrudes from the aperture 6, by means of one or more break-off wires 40 which are designed to break when a predetermined tension applied to the wire 40 is exceeded. By connecting the pulling line 38 to the first bend limiter 12 by means of one or more break-off wires 40 and connecting it directly to the leading end of the cable 4, when the break of wires 40 have been broken, the pulling line 38 is then only connected to the leading end of the cable 4, so that the cable 4 is then pulled through the cable protection assembly 2 by means of the pulling line 38.

Referring to Figure 4, the mechanical latch 14 has a housing 42 formed from durable nylon and having an internal bore 43 for passage of the cable 4. The housing 42 has apertures 44 through which galvanised steel latch fingers 46 project. The leading end 32 of the housing 42 is provided with a screw thread 48 designed to co-operate with a corresponding screw thread on the insert 30 at the trailing end of the first bend limiter 12 (Figure 3). The trailing end of the housing is provided with a steel flange 50 for abutting the edge of the aperture 6 in the support pillar 8 to prevent the flange 50 from being pulled into the aperture 6 when the cable protection assembly 2 is pulled into the aperture 6.

The latch fingers 46 are hinged to the housing 42 and are biased, by means of a heavy duty torsion spring (not shown), axially outwards of the housing 42 to a position in which trailing edges 52 of the latch fingers 46 prevent removal of the latch 14 from the aperture 6 in the support pillar 8. Leading faces 54 of the latch fingers 46 are inclined relative to the housing 42 to facilitate insertion of the latch 14 into the aperture 6 in the support pillar 8. The latch fingers 46 are arranged in rows such that latch fingers 46 are arranged at more than one axial location on the external surface of the housing 42, to facilitate engagement of the latch fingers 46 with the edge of the aperture 6 in the support pillar 8.

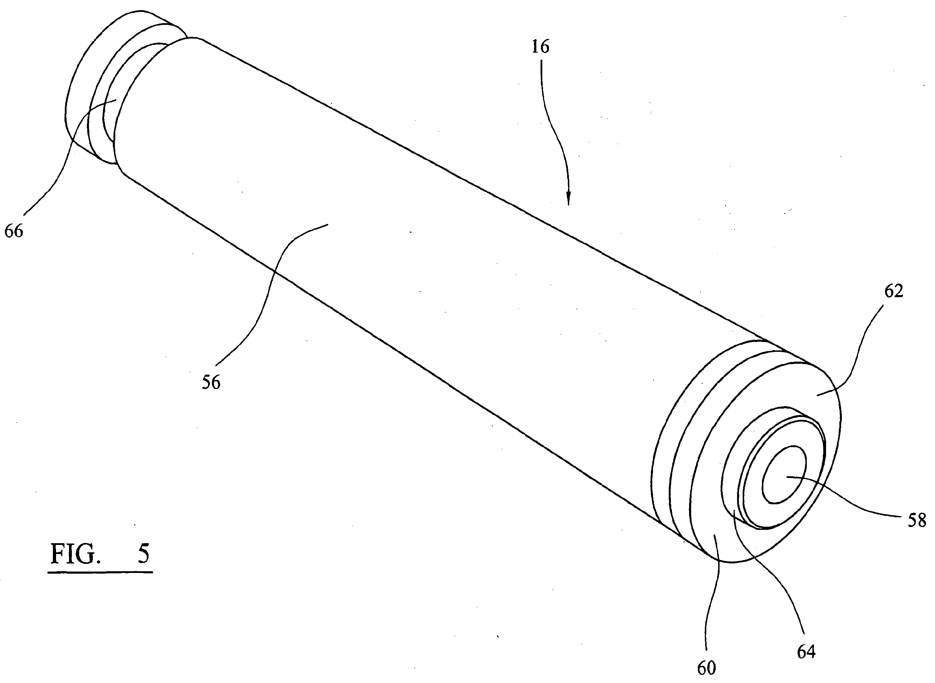

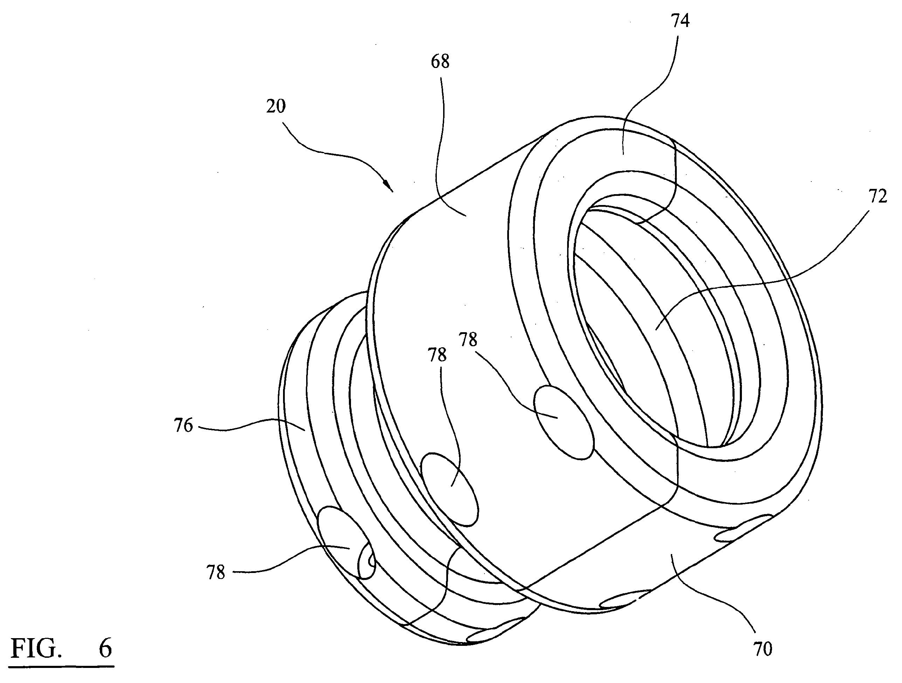

Figure 5 shows in more detail the second bend limiter 16. The bend limiter 16 has an elongate body 56 of high grade polyurethane elastomer having a central passageway 58 for passage of the cable 4. A leading end 60 of the bend limiter 16 is provided with a steel insert 62 having a screw thread 64 to enable mounting of the bend limiter 16 to the trailing end of the mechanical latch 14. An external groove 66 is provided near the trailing end of the bend limiter 16, in order to enable a bend restrictor element 20 (Figure 6) at a leading end of the third bend limiter 18 to be mounted to the second bend limiter 16.. The first and second bend limiters 12, 16 each have a body having sufficient flexibility to allow bending of the cable 4 passing therethrough, but are sufficiently resilient to prevent bending of the cable 4 around a sufficiently small bend radius to cause damage at the leading and trailing ends of the mechanical latch 14 respectively.

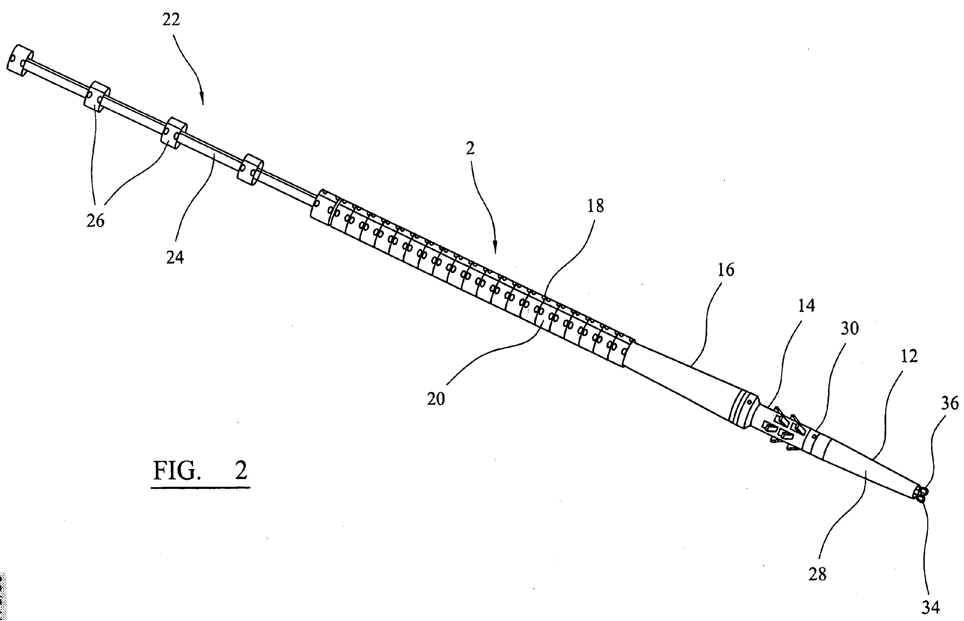

Figure 6 shows a bend restrictor element 20 of the third bend limiter 18 of Figures 1 and 2. The bend restrictor element 20 is formed from two clamshell halves 68, 70 of polyurethane. The clamshell halves 68, 70 form a body having in internal bore 72 to enable passage of the cable 4, and the body has a widened head 74, having an internal diameter slightly wider than the external diameter of a tail portion 76 of an adjacent bend restrictor element 20, such that when the two clamshells 68, 70 of a first element 20 are fastened together by means of bolts (not shown) in holes 78 such that the head 74 of the first element 20 encloses the tail portion 76 of the second element 20, limited pivoting of the first and second elements 20 relative each other about an axis perpendicular to the longitudinal axes of the elements 20 is permitted. This limits the extent to which a cable 4 passing through the longitudinal bores 72 of the elements 20 can bend, which prevents the cable 4 being bent around a sufficiently small bend radius to cause damage.

Figure 7 shows an attachment part 80 for attaching the pulling line 38, which is preinstalled in the support pillar 8, to the leading end of the assembly first bend limiter 12 and the leading end of the cable 4 such that the leading end of the cable 4 is located adjacent the leading end of the first bend limiter 12.

The operation of the cable protection assembly 2 shown in the figures will now be described.

The cable 4 is inserted into the assembly 2 prior to installation such that the leading end of the cable 4 protrudes slightly from the leading end of the first bend limiter 12. In order to carry out the installation process, the attachment part 80 of the pulling line 38 is retrieved by a diver or ROV (remotely operated vehicle) and transferred to the end of the cable 4 located on a vessel (not shown) at the surface such that the end of the pulling line 38 is attached directly to the leading end of the cable 4, and attached to the loops 36 at the leading end of the first bend limiter 12 by means of the break-off wire 40 as shown in Figure 7.

The cable 4 passing through the cable protection assembly 2 is then supported at a suitable location along its length by means of suitable apparatus such as a crane or A-frame on a ship (not shown) which will be familiar to persons skilled in the art, such that the cable 4 forms a catenary curve in the water under its own weight. The cable 4 is then fed forwards, while the pulling line 38 is pulled, as a result of which the cable 4 and cable protection assembly 2 are pulled into the aperture 6. As the mechanical latch 14 enters the aperture 6, one or more of the latch fingers 46 engage the edge of the aperture 6 and are pushed inwards against the force of the torsion spring, until the movement of the latch 14 into the aperture 6 is limited by abutment of the flange 50 against the edge of the aperture 6. As the latch fingers pass 46 through the aperture 6, they can move axially outwards under the force of the torsion spring to their full extent, so that their trailing edges 52 prevent removal of the latch 14 from the aperture 6 by engaging the internal edge of the aperture 6.

As a result of engagement of the flange 50 against the external edge of the aperture 6, the tension in the pull line 38 increases, as a result of which the break-off wire 40 eventually breaks. The latch 14 is then left in position in the aperture 6, but because the pulling line 38 is still connected to the leading end of the cable 4, the cable 4 can then be pulled through the cable protection assembly 2 and subsequently connected to the turbine (not shown). When the cable 4 has been pulled through the cable protection assembly 2 to the desired extent, the third and fourth bend limiters 18, 22 are laid on the sea bed 10, and the second end of the cable 4 is connected to a further turbine and/or power collection station (not shown).

## Claims

1. A protection device (14) for preventing damage to an elongate flexible member passing through an aperture (6), the device comprising:
a body (42) adapted to be inserted into the aperture (6) in a first direction and having an internal passageway (43) for allowing movement of an elongate flexible member therethrough; and
latching means (46) on said body (42) for engaging an edge of the aperture (6) to prevent removal of the body (42) from the aperture (6) in a second direction, opposite to said first direction, after insertion of said body (42) into said aperture in said first direction, to prevent the elongate flexible member from engaging the edge of the aperture (6),
wherein
the latching means (46) comprise:
a plurality of latching members movable relative to said body between a first position enabling insertion of said body (42) into said aperture (6) in said first direction and a second position preventing removal of said body (42) from said aperture (6) in said second direction, and
biasing means for biasing a plurality of said latching members towards the second position thereof; and
at least two said latching members are spaced apart in a direction along a longitudinal axis of said body (42),
**characterised in that** the body (42) has apertures through which latching members in the form of galvanised steel latch fingers (46) project.

2. A protection device (14) according to claim 1, wherein at least one said latching member has a respective inclined portion (54) for engaging the edge of the aperture (6) when the body (42) is inserted into the aperture in said first direction.

3. A protection device (14) according to any one of the preceding claims, wherein at least one said latching member is biased towards the second position thereof by means of at least one torsion spring arranged in the body.

4. A protection device (14) according to any one of the preceding claims, further comprising at least one abutment portion (50) arranged on said body (42) for abutting the edge of the aperture (6) to limit movement of the device through the aperture (6) in said first direction.

5. A protection device (14) according to any one of the preceding claims, wherein the body (42) is adapted to be mounted to a flexible bend limiting device (12, 16) at a first and/or second end of said body (42).

6. A protection assembly (2) for an elongate flexible member, the assembly comprising: a protection device (14) according to any one of the preceding claims and a bend limiting device (12) for resisting bending of an elongate flexible member passing through the aperture (6), the bend limiting device (12) comprising:
an elongate flexible body (28) adapted to pass through the aperture (6) and having an internal passageway (29) for allowing movement of an elongate flexible member therethrough; and
attachment means (34, 36, 40) adjacent a first end of said body (28) for enabling attachment of a pulling member (38) thereto to enable pulling of the device through the aperture (6).

7. An assembly (2) according to claim 6, including one or more of the following features:
(i) wherein the attachment means comprises at least one tensile member (34) having an engagement portion (36) adjacent a first end thereof;
(ii) wherein the bend limiting device (12) further comprises mounting means (30) adjacent a second end of said body (28) for mounting the bend limiting device (12) to the protection device (14);
(iii) wherein the attachment means further comprises tension limiting means (40) for limiting the tension applied to the bend limiting device (12) by means of a pulling member (38);
(iv) wherein the tension limiting means (40) comprises at least one attachment device adapted to break when a tension applied thereto exceeds a predetermined level; or
(v) further comprising a second bend limiting device (16) adapted to be mounted to a second end of said protection device (14), the second bend limiting device (16) comprising an elongate flexible body (56) having an internal passageway (58) for passage of an elongate flexible member therethrough.

8. An assembly (2) according to claim 7, wherein at least one said tensile member (34) is at least partially embedded in said body (28).

9. An assembly (2) according to claim 7 or 8, wherein at least one said tensile member (34) is attached to said mounting means (30) adjacent a second end thereof.

10. An assembly (2) according to anyone of claims 7 to 9, wherein the second bend limiting device (16) is adapted to be attached to a third bend limiting device (18) at a second end of said second bend limiting device (16).

11. An assembly (2) according to claim 10, wherein the second bend limiting device (16) is adapted to be attached to a third bend limiting device (18) by means of at least one groove (66) in said body adjacent said second end.

12. An assembly (2) according to any one of claims 10 or 11, further comprising a third bend limiting device (18) comprising a plurality of bend restriction members (20), wherein each of said plurality of bend restriction members (20) has a respective passageway (72) to enable passage of an elongate flexible member therethrough, and each said bend restriction member (20) is adapted to be mounted to at least one further said bend restriction member (20) to allow limited pivotal movement of said bend restriction members (20) relative to each other.

13. A method of inserting an elongate flexible member into an aperture (6), the method comprising:
attaching a pulling member (38) to attachment means of a bend limiting device (12) of a protection assembly (2) according to anyone of claims 6 to 11, wherein an elongate flexible member is mounted adjacent a first end of said bend limiting device (12) such that said protection assembly (2) is located adjacent a first end of said elongate flexible member and said pulling member (38) extends through an aperture;
pulling, by means of said pulling member (38), the protection assembly (2) in a first direction to cause the protection device (14) of said protection assembly (2) to engage an edge of the aperture (6); and
pulling the elongate flexible member through said protection assembly (2) in said first direction.

14. A method according to claim 13, including one or more of the following features:
(i) wherein the elongate flexible member is pulled through the protection assembly (2) by means of the pulling member (38);
(ii) wherein the step of attaching the pulling member (38) to said attachment means comprises attaching the pulling member to said attachment means (36) by means of tension limiting means (40) adapted to limit the tension applied to the protection assembly (2) by means of the pulling member (38);
(iii) further comprising supporting the elongate flexible member at a location spaced from said aperture (6); or
(iv) wherein the elongate flexible member comprises a cable (4) or conduit.

## Patentansprüche

1. Schutzvorrichtung (14) zum Verhindern von Schäden an einem länglichen flexiblen Element, das durch eine Öffnung (6) geführt wird, wobei die Vorrichtung Folgendes umfasst:
einen Körper (42), der dafür ausgelegt ist, in die Öffnung (6) in einer ersten Richtung eingeführt zu werden, und der einen Innenkanal (43) aufweist, um die Bewegung eines länglichen flexiblen Elements durch ihn hindurch zu ermöglichen; und
Verriegelungsmittel (46) an dem Körper (42) zur Ineingriffnahme einer Kante der Öffnung (6), um das Entfernen des Körpers (42) aus der Öffnung (6) in einer zweiten Richtung, die zur ersten Richtung entgegengesetzt ist, nach Einführen des Körpers (42) in die Öffnung in der ersten Richtung zu verhindern, sodass verhindert wird, dass das längliche flexible Element die Kante der Öffnung (6) in Eingriff nimmt,
wobei
die Verriegelungsmittel (46) Folgendes umfassen:
eine Mehrzahl von Verriegelungselementen, die relativ zum Körper zwischen einer ersten Position, welche das Einführen des Körpers (42) in die Öffnung (6) in der ersten Richtung ermöglicht, und einer zweiten Position, welche das Entfernen des Körpers (42) aus der Öffnung (6) in der zweiten Richtung verhindert, beweglich ist, und
Vorspannungsmittel zum Vorspannen einer Mehrzahl der Verriegelungselemente zu ihrer zweiten Position hin; und
wenigstens zwei der Verriegelungselemente in einer Richtung entlang einer Längsachse des Körpers (42) beabstandet sind,
**dadurch gekennzeichnet, dass** der Körper (42) Öffnungen aufweist, durch die Verriegelungselemente in Form von Verriegelungsklinken (46) aus verzinktem Stahl ragen.

2. Schutzvorrichtung (14) nach Anspruch 1, wobei wenigstens eins der Verriegelungselemente einen entsprechend geneigten Abschnitt (54) zur Ineingriffnahme der Kante der Öffnung (6), wenn der Körper (42) in die Öffnung in der ersten Richtung eingeführt wird, aufweist.

3. Schutzvorrichtung (14) nach einem der vorangehenden Ansprüche, wobei wenigstens eins der Verriegelungselemente zu seiner zweiten Position hin durch wenigstens eine im Körper angeordnete Drehfeder vorgespannt ist.

4. Schutzvorrichtung (14) nach einem der vorangehenden Ansprüche, ferner umfassend wenigstens einen am Körper (42) angeordneten Anschlagsabschnitt (50), an den die Kante der Öffnung (6) anschlägt, sodass die Bewegung der Vorrichtung durch die Öffnung (6) in der ersten Richtung begrenzt wird.

5. Schutzvorrichtung (14) nach einem der vorangehenden Ansprüche, wobei der Körper (42) dafür ausgelegt ist, an einer flexiblen Biegebegrenzungsvorrichtung (12, 16) an einem ersten und/oder zweiten Ende des Körpers (42) montiert zu werden.

6. Schutzanordnung (2) für ein längliches flexibles Element, wobei die Anordnung Folgendes umfasst:
eine Schutzvorrichtung (14) nach einem der vorangehenden Ansprüche und
eine Biegebegrenzungsvorrichtung (12) zum Begrenzen des Biegens eines länglichen flexiblen Elements, das durch die Öffnung (6) geführt wird, wobei die Biegebegrenzungsvorrichtung (12) Folgendes umfasst:
einen länglichen flexiblen Körper (28), der dafür ausgelegt ist, durch die Öffnung (6) geführt zu werden, und der einen Innenkanal (29) aufweist, um die Bewegung eines länglichen flexiblen Elements durch ihn hindurch zu ermöglichen; und
an ein erstes Ende des Körpers (28) angrenzende Befestigungsmittel (34, 36, 40), um die Befestigung eines Ziehelements (38) daran zu ermöglichen, sodass die Vorrichtung durch die Öffnung (6) gezogen werden kann.

7. Anordnung (2) nach Anspruch 6, umfassend eines oder mehrere der folgendes Merkmale:
(i) wobei das Befestigungsmittel wenigstens ein Zugelement (34) mit einem an ein erstes Ende davon angrenzenden Eingriffsabschnitt (36) umfasst;
(ii) wobei die Biegebegrenzungsvorrichtung (12) ferner ein an ein zweites Ende des Körpers (28) angrenzendes Montagemittel (30) zum Montieren der Biegebegrenzungsvorrichtung (12) an der Schutzvorrichtung (14) umfasst;
(iii) wobei das Befestigungsmittel ferner Zugbegrenzungsmittel (40) zum Begrenzen des auf die Biegebegrenzungsvorrichtung (12) mittels eines Ziehelements (38) ausgeübten Zugs umfasst;
(iv) wobei das Zugbegrenzungsmittel (40) wenigstens eine Befestigungsvorrichtung umfasst, die dafür ausgelegt ist, zu brechen, wenn ein Zug darauf ausgeübt wird, der ein vorbestimmtes Maß übersteigt; oder
(v) ferner umfassend eine zweite Biegebegrenzungsvorrichtung (16), die dafür ausgelegt ist, an einem zweiten Ende der Schutzvorrichtung (14) montiert zu werden, wobei die zweite Biegebegrenzungsvorrichtung (16) einen länglichen flexiblen Körper (56) mit einem Innenkanal (58) zum Durchführen eines länglichen flexiblen Elements durch ihn hindurch umfasst.

8. Anordnung (2) nach Anspruch 7, wobei wenigstens eins der Zugelemente (34) zumindest teilweise in den Körper (28) eingebettet ist.

9. Anordnung (2) nach Anspruch 7 oder 8, wobei wenigstens ein Zugelement (34) an dem an ein zweites Ende davon angrenzenden Montagemittel (30) befestigt ist.

10. Anordnung (2) nach einem der Ansprüche 7 bis 9, wobei die zweite Biegebegrenzungsvorrichtung (16) dafür ausgelegt ist, an einer dritten Biegebegrenzungsvorrichtung (18) an einem zweiten Ende der zweiten Biegebegrenzungsvorrichtung (16) befestigt zu werden.

11. Anordnung (2) nach Anspruch 10, wobei die zweite Biegebegrenzungsvorrichtung (16) dafür ausgelegt ist, an einer dritten Biegebegrenzungsvorrichtung (18) mittels wenigstens einer an das zweite Ende angrenzenden Nut (66) in dem Körper befestigt zu werden.

12. Anordnung (2) nach einem der Ansprüche 10 oder 11, ferner umfassend eine dritte Biegebegrenzungsvorrichtung (18), umfassend eine Mehrzahl von Biegebegrenzungselementen (20), wobei jedes der Mehrzahl von Biegebegrenzungselementen (20) einen jeweiligen Kanal (72) aufweist, um das Durchführen eines länglichen flexiblen Elements durch ihn hindurch zu ermöglichen, und jedes der Biegebegrenzungselemente (20) dafür ausgelegt ist, an wenigstens einem weiteren der Biegebegrenzungselemente (20) montiert zu werden, um eine eingeschränkte Schwenkbewegung der Biegebegrenzungselemente (20) relativ zueinander zu ermöglichen.

13. Verfahren zum Einführen eines länglichen flexiblen Elements in eine Öffnung (6), wobei das Verfahren Folgendes umfasst:
Befestigen eines Ziehelements (38) an einem Befestigungsmittel einer Biegebegrenzungsvorrichtung (12) einer Schutzanordnung (2) nach einem der Ansprüche 6 bis 11, wobei ein längliches flexibles Element angrenzend an ein erstes Ende der Biegebegrenzungsvorrichtung (12) derart montiert wird, dass sich die Schutzanordnung (2) angrenzend an ein erstes Ende des länglichen flexiblen Elements befindet und sich das Ziehelement (38) durch eine Öffnung erstreckt;
Ziehen der Schutzanordnung (2) in eine erste Richtung mithilfe des Ziehelements (38), sodass die Schutzvorrichtung (14) der Schutzanordnung (2) dazu veranlasst wird, eine Kante der Öffnung (6) in Eingriff zu nehmen; und
Ziehen des länglichen flexiblen Elements durch die Schutzanordnung (2) in der ersten Richtung.

14. Verfahren nach Anspruch 13, umfassend eines oder mehrere der folgendes Merkmale:
(i) wobei das längliche flexible Element durch die Schutzanordnung (2) mithilfe des Ziehelements (38) gezogen wird;
(ii) wobei der Schritt des Befestigens des Ziehelements (38) an dem Befestigungsmittel das Befestigen des Ziehelements an dem Befestigungsmittel (36) mithilfe des Zugbegrenzungsmittels (40) umfasst, das dafür ausgelegt ist, den auf die Schutzanordnung (2) mittels des Ziehelements (38) ausgeübten Zug zu begrenzen;
(iii) ferner umfassend Stützen des länglichen flexiblen Elements an einer Stelle, die von der Öffnung (6) beabstandet ist; oder
(iv) wobei das längliche flexible Element ein Kabel (4) oder eine Leitung umfasst.

## Revendications

1. Dispositif de protection (14) destiné à empêcher un endommagement d'un élément flexible allongé traversant une ouverture (6), le dispositif comprenant :
un corps (42) conçu pour une introduction, dans un premier sens, dans l'ouverture (6) et comportant un passage interne (43) permettant un déplacement d'un élément flexible allongé à travers ce dernier ; et
des moyens de verrouillage (46) situé sur ledit corps (42) destiné à coopérer avec un bord de l'ouverture (6) pour empêcher un retrait, dans un second sens, du corps (42) de l'ouverture (6), le second sens étant opposé audit premier sens, après l'introduction, dans ledit premier sens, dudit corps (42) dans ladite ouverture, de façon à empêcher un contact de l'élément flexible allongé avec le bord de l'ouverture (6),
dans lequel
les moyens de verrouillage (46) comprennent :
une pluralité d'éléments de verrouillage mobiles par rapport audit corps entre une première position permettant une introduction, dans ledit premier sens, dudit corps (42) dans ladite ouverture (6) et une seconde position empêchant un retrait, dans ledit second sens, dudit corps (42) de ladite ouverture (6), et
des moyens de sollicitation destinés à solliciter une pluralité desdits éléments de verrouillage en direction de leur seconde position ; et
au moins deux éléments de verrouillage parmi lesdits éléments de verrouillage sont espacés dans une direction suivant un axe longitudinal dudit corps (42),
**caractérisé en ce que** le corps (42) comporte des ouvertures à travers lesquelles font saillie des éléments de verrouillage sous la forme de doigts de verrouillage en acier galvanisé (46).

2. Dispositif de protection (14) selon la revendication 1, dans lequel au moins un élément de verrouillage parmi lesdits éléments de verrouillage comporte une partie inclinée respective (54) destinée à coopérer avec le bord de l'ouverture (6) lors de l'introduction, dans ledit premier sens, du corps (42) dans l'ouverture.

3. Dispositif de protection (14) selon l'une quelconque des revendications précédentes, dans lequel au moins un élément de verrouillage parmi lesdits éléments de verrouillage est sollicité en direction de sa seconde position au moyen d'au moins un ressort de torsion disposé dans le corps.

4. Dispositif de protection (14) selon l'une quelconque des revendications précédentes, comprenant en outre au moins une partie d'appui (50) disposée sur ledit corps (42) destinée à venir en appui contre le bord de l'ouverture (6) pour limiter le déplacement, dans ledit premier sens, du dispositif à travers l'ouverture (6).

5. Dispositif de protection (14) selon l'une quelconque des revendications précédentes, dans lequel le corps (42) est conçu pour être monté sur un dispositif flexible de limitation de fléchissement (12, 16) au niveau d'une première et/ou d'une seconde extrémité dudit corps (42).

6. Ensemble (2) de protection d'un élément flexible allongé, l'ensemble comprenant :
un dispositif de protection (14) selon l'une quelconque des revendications précédentes et un dispositif de limitation de fléchissement (12) destiné à résister à un fléchissement d'un élément flexible allongé traversant l'ouverture (6), le dispositif de limitation de fléchissement (12) comprenant :
un corps flexible allongé (28) conçu pour traverser l'ouverture (6) et comportant un passage interne (29) destiné à permettre un déplacement d'un élément flexible allongé à travers ce dernier ; et
un moyen d'attache (34, 36, 40) adjacent à une première extrémité dudit corps (28) permettant d'y attacher un élément de traction (38) pouvant tirer le dispositif à travers l'ouverture (6).

7. Ensemble (2) selon la revendication 6, comprenant une ou plusieurs des caractéristiques suivantes, telles que :
(i) le moyen d'attache comprend au moins un élément de traction (34) dont une partie de coopération (36) est adjacente à sa première extrémité ;
(ii) le dispositif de limitation de fléchissement (12) comprend en outre un moyen de montage (30) adjacent à une seconde extrémité dudit corps (28) permettant un montage du dispositif de limitation de fléchissement (12) sur le dispositif de protection (14) ;
(iii) le moyen d'attache comprend en outre un moyen de limitation de tension (40) destiné à limiter la tension appliquée au dispositif de limitation de fléchissement (12) au moyen d'un élément de traction (38) ;
(iv) le moyen de limitation de tension (40) comprend au moins un dispositif d'attache conçu pour rompre lorsqu'une tension qui lui est appliquée dépasse un niveau prédéterminé ; ou
(v) comprenant en outre un deuxième dispositif de limitation de fléchissement (16) conçu pour être monté sur une seconde extrémité dudit dispositif de protection (14), le deuxième dispositif de limitation de fléchissement (16) comprenant un corps flexible allongé (56) comportant un passage interne (58) permettant le passage d'un élément flexible allongé à travers ce dernier.

8. Ensemble (2) selon la revendication 7, dans lequel ledit au moins un élément de traction (34) est au moins partiellement incorporé dans ledit corps (28).

9. Ensemble (2) selon la revendication 7 ou 8, dans lequel ledit au moins un élément de traction (34) est attaché audit moyen de montage (30) de manière adjacente à sa seconde extrémité.

10. Ensemble (2) selon l'une quelconque des revendications 7 à 9, dans lequel le deuxième dispositif de limitation de fléchissement (16) est conçu pour être fixé à un troisième dispositif de limitation fléchissement (18) au niveau d'une seconde extrémité dudit deuxième dispositif de limitation de fléchissement (16).

11. Ensemble (2) selon la revendication 10, dans lequel le deuxième dispositif de limitation de fléchissement (16) est conçu pour être fixé à un troisième dispositif de limitation de fléchissement (18) au moyen d'au moins une rainure (66) ménagée dans ledit corps de manière adjacente à ladite seconde extrémité.

12. Ensemble (2) selon l'une quelconque des revendications 10 ou 11, comprenant en outre un troisième dispositif de limitation de fléchissement (18) comportant une pluralité d'éléments de restriction de fléchissement (20), dans lequel chacun de ladite pluralité d'éléments de restriction de fléchissement (20) comporte un passage respectif (72) permettant le passage, à travers ce dernier, d'un élément flexible allongé, et chacun desdits éléments de restriction de fléchissement (20) est conçu pour être monté sur au moins un autre élément de restriction de fléchissement parmi lesdits éléments de restriction de fléchissement (20) pour permettre un déplacement de pivotement limité les uns par rapport aux autres desdits éléments de restriction de fléchissement (20).

13. Procédé d'introduction d'un élément flexible allongé dans une ouverture (6), le procédé consistant à :
attacher un élément de traction (38) à un moyen d'attache d'un dispositif de limitation de fléchissement (12) d'un ensemble (2) de protection selon l'une quelconque des revendications 6 à 11, dans lequel un élément flexible allongé est monté de manière adjacente à une première extrémité dudit dispositif de limitation de fléchissement (12) de sorte que ledit ensemble (2) de protection est situé adjacent à une première extrémité dudit élément flexible allongé et que ledit élément de traction (38) s'étend à travers une ouverture ;
tirer l'ensemble (2) de protection dans un premier sens au moyen dudit élément de traction (38) pour amener le dispositif de protection (14) dudit ensemble (2) de protection à coopérer avec un bord de l'ouverture (6) ; et
tirer l'élément flexible allongé à travers ledit ensemble (2) de protection dans ledit premier sens.

14. Procédé selon la revendication 13, comprenant une ou plusieurs des caractéristiques suivantes, telles que :
(i) l'élément flexible allongé est tiré à travers l'ensemble (2) de protection au moyen d'un élément de traction (38) ;
(ii) l'étape consistant à attacher l'élément de traction (38) audit moyen d'attache consiste à attacher l'élément de tirée audit moyen d'attache (36) à l'aide d'un moyen de limitation de tension (40) conçu pour limiter la tension appliquée à l'ensemble (2) de protection au moyen de l'élément de traction (38) ;
(iii) l'étape consiste en outre à supporter l'élément flexible allongé à une position espacée de ladite ouverture (6) ; ou
(iv) l'élément flexible allongé comprend un câble (4) ou un conduit.
